Europäisches Patentamt

European Patent Office

Office européen des brevets

(11) Veröffentlichungsnummer: **0 306 950 B1**

(12) **EUROPÄISCHE PATENTSCHRIFT**

(45) Veröffentlichungstag der Patentschrift: **01.04.92**

(21) Anmeldenummer: **88114690.6**

(22) Anmeldetag: **08.09.88**

(51) Int. Cl.⁵: **B60J 7/057**

(54) **Betätigungsvorrichtung für bewegbare Teile zum Schliessen von Öffnungen in Fahrzeugen.**

(30) Priorität: **08.09.87 DE 3730034**

(43) Veröffentlichungstag der Anmeldung:
**15.03.89 Patentblatt 89/11**

(45) Bekanntmachung des Hinweises auf die
Patenterteilung:
**01.04.92 Patentblatt 92/14**

(84) Benannte Vertragsstaaten:
**DE FR GB NL**

(56) Entgegenhaltungen:
**EP-A- 0 278 536**
**DE-A- 3 411 001**
**DE-A- 3 612 150**
**GB-A- 2 131 080**

(73) Patentinhaber: **Webasto AG Fahrzeugtechnik**
**Kraillingerstrasse 5**
**W-8035 Stockdorf(DE)**

(72) Erfinder: **Borrmann, Hans-Achim**
**Tulpenweg 3 Aufkirch**
**W-8951 Kaltental(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

# Beschreibung

Die Erfindung bezieht sich auf eine Betätigungsvorrichtung für bewegbare Teile zum Schließen von Öffnungen, wie Fenstern, Türen oder Dachöffnungen, in Fahrzeugen, mit einem in seiner Drehrichtung umsteuerbaren Gleichstrom-Antriebsmotor zum Antreiben des bewegbaren Teils, einem im Motorstromkreis liegenden Umpol-Betätigungsschalter zum Anlegen einer Gleichspannung an den Motorstromkreis mit einer wahlweise der einen oder der anderen Motordrehrichtung entsprechenden Polung, einem Relais, das einen im Motorstromkreis in Reihe mit dem Umpol-Betätigungsschalter liegenden Schaltkontakt aufweist, sowie einer mit dem Steuerstromkreis des Relais in Verbindung stehenden Lageerkennungsstufe zum Betätigen des Relais in einer vorbestimmten Bezugstellung des bewegbaren Teils zwecks selbsttätiger Stillsetzung des Antriebsmotors in dieser Bezugsstellung durch Öffnen des Schaltkontakts gemäß dem Oberbegriff des Patentanspruchs 1.

Eine gattungsgemäße Betätigungsvorrichtung ist aus der GB-A-2 131 080 bekannt. Bei dieser weist die elektronische Relaisbetätigungsstufe ein RC-Glied auf, dessen Kondensator durch Schließen des Umpol-Betätigungsschalters über den zugehörigen Widerstand aufgeladen wird und nach Öffnen des Umpol-Betätigungsschalters das Relais für eine Zeitspanne angezogen hält, die von der Zeitkonstanten der RC-Schaltung abhängt und die vorzugsweise kleiner als eine Sekunde sein soll. Die Relaisbetätigungsstufe wird dort also für eine vorgegebene Zeitspanne im gesetzten Zustand gehalten. Eine solche Auslegung einer Betätigungsvorrichtung kann insbesondere dann zu Problemen führen, wenn bei der Betätigung des bewegbaren Teils (beispielsweise eines Schiebedachdeckels) aus irgendwelchen Gründen erhöhte Widerstände überwunden werden müssen, beispielsweise auf Grund von niedrigen Außentemperaturen. In einem solchen Fall besteht die Gefahr, daß sich das bewegbare Teil noch in der Bezugsstellung befindet, wenn die vorgegebene Zeitspanne bereits abgelaufen ist.

Bei anderen bekannten Betätigungsvorrichtungen gemäß DE-C-21 00 336 und DE-C-24 54 723 ist das Relais als Stromstoßrelais ausgebildet. Diese Betätigungsvorrichtungen haben den Nachteil, daß relativ hohe Schaltgeräusche entstehen. Außerdem ist die erzielbare Reaktionszeit unerwünscht lang.

Der im Anspruch 1 angegebenen Erfindung liegt die Aufgabe zugrunde, eine Betätigungsvorrichtung zu schaffen, die sich bei geringer Geräuschentwicklung und kurzer Reaktionszeit durch eine besonders hohe Funktionssicherheit auszeichnet.

Diese Aufgabe wird erfindungsgemäß durch die Merkmale im kennzeichnenden Teil des Patentanspruchs 1 gelöst. Mittels der erfindungsgemäßen Lösung wird die Relaisbetätigungsstufe in Abhängigkeit von der Position des bewegbaren Teils mindestens so lange im gesetzten Zustand gehalten, bis das bewegbare Teil die Bezugsstellung verlassen hat. Mittels einer solchen, im Gegensatz zum Stand der Technik nicht zeitabhängigen, sondern positionsabhängigen Steuerung, werden Fehlbetätigungen, die beispielsweise durch eine Schwergängigkeit des bewegbaren Teils verursacht werden könnten, praktisch ausgeschlossen.

Der Ausgangskreis der Relaisbetätigungsstufe kann in Reihe oder parallel zu der Lageerkennungsstufe geschaltet sein.

-   die in Abhängigkeit von der Position des bewegbaren Teils mindestens so lange im gesetzten Zustand gehalten wird, bis das bewegbare Teil die Bezugsstellung verlassen hat.

Die Betätigungsvorrichtung nach der Erfindung zeichnet sich durch einen besonders niedrigen Schaltgeräuschpegel aus. Während bei der bekannten Stromstoßrelais-Betätigungsvorrichtung mit Reaktionszeiten bis etwa 200 ms gerechnet werden muß, ermöglicht die erfindungsgemäße Lösung Reaktionszeiten von weniger als 10 ms. Das erforderliche Gesamteinbauvolumen der Betätigungsvorrichtung nach der Erfindung ist selbst bei einer beispielsweise von 10 auf 30 A erhöhten Schaltleistung nur gleich oder sogar kleiner als im Falle der bekannten Betätigungsvorrichtung mit Stromstoßrelais. Da Gleichstromrelais er vorliegend vorgesehenen Art im Gegensatz zu Stromstoßrelais auch in Hochqualitätsausführung als preiswerte Massenprodukte zur Verfügung stehen, können die Gesamtkosten der erfindungsgemäßen Betätigungsvorrichtung gleich oder kleiner als die der bekannten Stromstoßrelais-Betätigungsvorrichtung gehalten werden. Die Lebensdauer ist erhöht. Anders als die Betätigungsvorrichtung mit Stromstoßrelais kann die erfindungsgemäße Anordnung ohne weiteres dauerstromfest ausgelegt werden. Die Schüttelfestigkeit ist gleichfalls erhöht. Fehlbetätigungen, beispielsweise verursacht durch Schwergängigkeit des bewegbaren Teils, sind praktisch ausgeschlossen.

Der Ausgangskreis der Relaisbetätigungsstufe kann in Reihe oder parallel zu der Lageerkennungsstufe geschaltet sein.

Zur Verkürzung der Reaktionszeit trägt bei, wenn in weiterer Ausgestaltung der Erfindung die Lageerkennungsstufe das Relais abfallen läßt, wenn das bewegbare Teil in die Bezugsstellung einläuft, und der den Antriebsmotor ein- und ausschaltende Schaltkontakt als Schließer ausgebildet ist. Die Lageerkennungsstufe kann einfach einen Schalter, beispielsweise Mikroschalter, aufweisen, der bei in der Bezugsstellung stehendem bewegbarem Teil eine erste Schaltstellung und bei aus der Bezugsstellung herausbewegtem bewegbarem Teil eine zweite Schaltstellung einnimmt. Ein solcher Schalter kann unmittelbar von dem bewegbaren Teil betätigt werden. Seine Betätigung kann aber auch auf andere Weise mit der Bewegung des bewegbaren Teils verknüpft sein. Grundsätzlich kommen aber auch in anderer Weise ausgebildete Lageerkennungsstufen in Betracht, beispielsweise Lageerkennungsstufen mit Hall-Sensor oder dergleichen. Ein besonders einfacher Aufbau wird erreicht, wenn der Lageerkennungsschalter mit der Wicklung des Relais unmittelbar in Reihe geschaltet ist. Die Schaltungsauslegung kann aber auch so getroffen sein, daß der Lageerkennungsschalter auf das Relais über die elektronische Relaisbetätigungsstufe einwirkt. Die Relaisbetätigungsstufe weist vorzugsweise mindestens einen mit dem Umpol-Betätigungsschalter in Verbindung stehenden dynamischen Eingang auf.

In weiterer Ausgestaltung der Erfindung ist die Relaisbetätigungsstufe mit einer Selbsthalteschleife versehen, welche die Relaisbetätigungsstufe nach dem Setzen mindestens so lange in gesetztem Zustand hält, bis das bewegbare Teil die Bezugsstellung verlassen hat.

Eine besonders hohe Funktionssicherheit wird erreicht, wenn der Lageerkennungsschalter einen Umschaltkontakt aufweist, der bei in der Bezugsstellung stehendem bewegbarem Teil den Ausgangskreis der Relaisbetätigungsstufe in Reihe mit der Wicklung des Relais legt und der, nachdem das bewegbare Teil die Bezugsstellung verlassen hat, einen über den Umpol-Betätigungsschalter führenden Relaishaltekreis schließt.

Um die Relaisbetätigungsstufe mit relativ geringem Schaltungsaufwand von dem Umpol-Betätigungsschalter unabhängig davon anzusteuern, welche Polung der Betätigungsschalter vorgibt, kann die Relaisbetätigungsstufe zweckmäßig mit dem Steuerstromkreis des Relais an den Umpol-Betätigungsschalter parallel zu dem Motorstromkreis über einen Vollweggleichrichter angeschlossen sein. Dabei ist die Schaltungsauslegung zweckmäßig so getroffen, daß der Lageerkennungsschalter bei in der Bezugsstellung stehendem bewegbarem Teil offen ist, und zur Übermittelung eines Rückstellsignals ist der Lageerkennungsschalter mit einem statischen Eingang der Relaisbetätigungsstufe über eine Diode verbunden, die bei offenem Lageerkennungsschalter gesperrt gehalten ist. Die Betätigungsvorrichtung ist im Fahrzeug in aller Regel erheblichen Temperaturänderungen ausgesetzt. Mit Rücksicht darauf liegt vorzugsweise im Ausgangskreis der Relaisbetätigungsstufe ein Termperaturdrift-Kompensationsglied, das bei offenem Lageerkennungsschalter an der Diode unabhängig von Temperaturänderungen eine für ein sicheres Sperren der Diode ausreichende Sperrspannung aufrecht erhält.

Entsprechend einer abgewandelten Ausführungsform der Erfindung weist die Relaisbetätigungsstufe zwei im wesentlichen spiegelsymmetrische Schaltungseinheiten auf, von denen die eine auf ein Schließen des Umpol-Betätigungsschalters in der einen Polungsrichtung und die andere auf ein Schließen des Umpol-Betätigungsschalters in der anderen Polungsrichtung anspricht. Dabei ist vorzugsweise jede der beiden Schaltungseinheiten mit einem mit dem Umpol-Betätigungsschalter direkt verbundenen dynamischen Setzeingang und mit einem an die Lageerkennungsstufe angeschlossenen dynamischen Rückstelleingang versehen. Auf diese Weise wird ein impulsabhängiges System erhalten, das gegen die bekannte Stromstoßrelais-Betätigungsvorrichtung unmittelbar - d.h. ohne Änderung der Anschlüsse der Betätigungsvorrichtung - ausgewechselt werden kann. In beiden Anfahrrichtungen können die zum Fahren und Stoppen notwendigen Steuersignale unmittelbar mechanisch (durch Schalterbetätigung) ausgelöst werden.

Die erfindungsgemäße Betätigungsvorrichtung läßt im übrigen Schaltungserweiterungen für Sonderwünsche, wie z.B. automatisches Schließen bei Regen, ohne weiteres zu.

Ausführungsbeispiele der Erfindung sind im folgenden anhand der Zeichnung erläutert. Es zeigen:

Fig. 1 ein Schaltbild der Betätigungsvorrichtung gemäß einer ersten Ausführungsform,

Fig. 2 ein Schaltbild der Betätigungsvorrichtung gemäß einer zweiten Ausführungsform,

Fig. 3 ein Schaltbild einer weiter abgewandelten Ausführungsform der Betätigungsvorrichtung,

Fig. 4 ein mittels der Betätigungsvorrichtung nach Fig. 1 oder Fig. 2 steuerbares Schiebehebedach in geöffneter Stellung,

Fig. 5 das Schiebehebedach in der Schließstellung, und

Fig. 6 das Schiebehebedach in ausgestellter Lage.

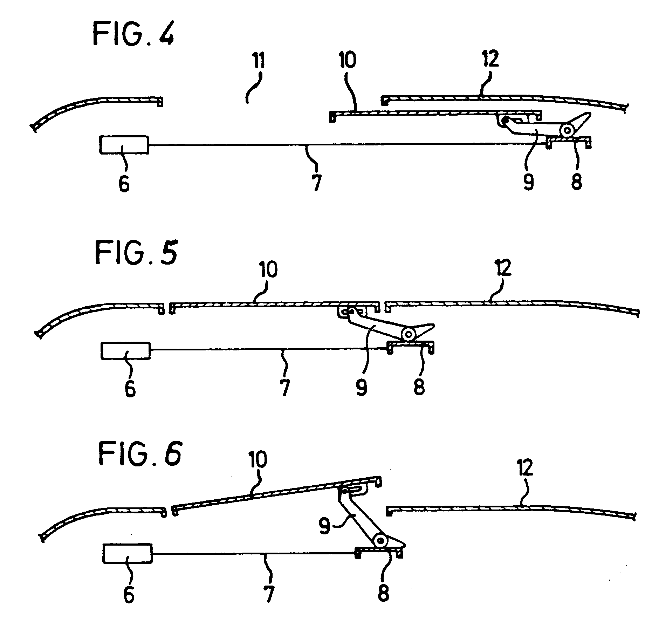

Bei den in den Figuren veranschaulichten Ausführungsbeispielen dient ein Gleichstrom-Antriebsmotor 6, der in seiner Drehrichtung umgesteuert werden kann, dem Betätigen eines Schiebehebedachs, das einen Deckel 10 aufweist, mittels dessen eine Dachöffnung 11 eines Fahrzeugs, von dem in den Fign. 4, 5 und 6 nur das Dach 12 angedeutet ist, verschlossen oder mindestens teilweise freigelegt werden kann. Der Antriebsmotor 6 verstellt in an sich bekannter Weise (DE-AS 19 33 991) über ein drucksteifes Antriebskabel 7 eine Transportbrücke 8, die in Fahrzeuglängsrichtung verschiebbar geführt ist. Zu beiden Seiten der Transportbrücke 8 ist jeweils ein Ausstellhebel 9 schwenkbar gelagert. Die Ausstellhebel 9 werden in Abhängigkeit von der Verschiebung der Transportbrücke 8 in nicht näher dargestellter Weise zu Schwenkbewegungen veranlaßt. Die Auslegung ist so getroffen, daß der Deckel 10 ausgehend von der in Fig. 5 veranschaulichten Schließstellung wahlweise abgesenkt und nach hinten geschoben (Fig. 4) oder mit seiner Hinterkante über die Fläche des festen Dachs 12 in eine Lüftungsposition ausgestellt werden kann (Fig. 6).

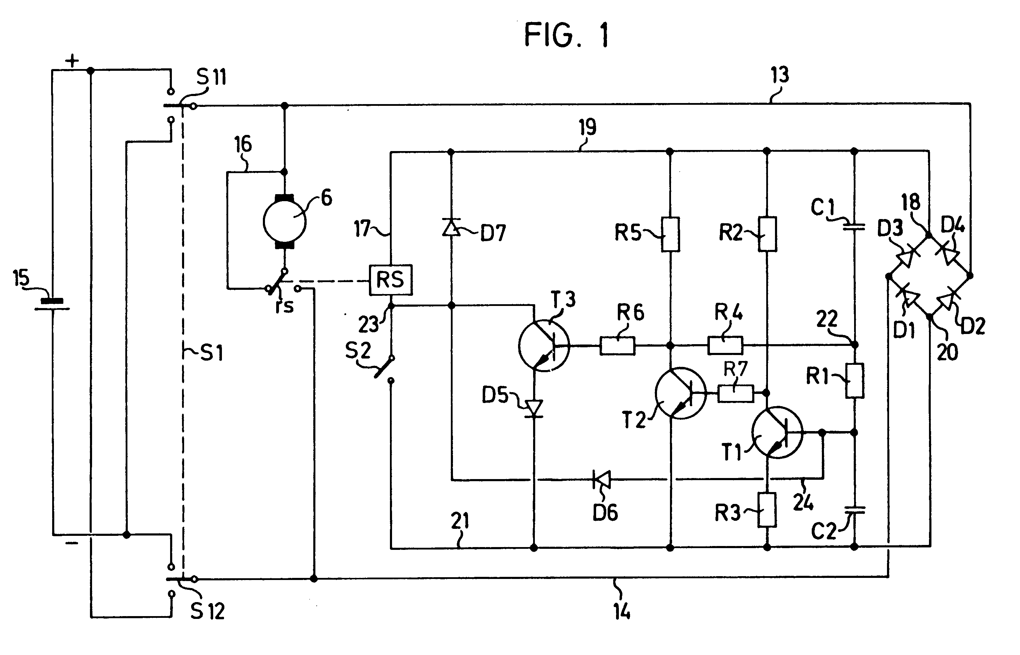

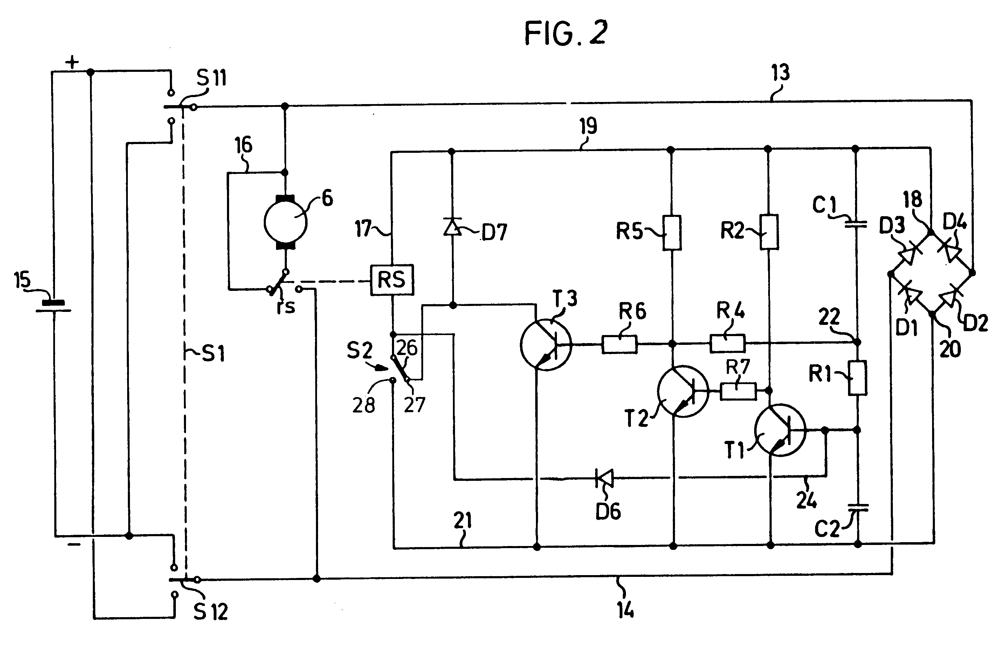

Im Motorstromkreis des Antriebsmotors 6 liegt ein Umpol-Betätigungsschalter S1, der zwei miteinander mechanisch gekoppelte Umschaltkontakt S11 and S12 aufweist. Durch Betätigen des Schalters S1 von Hand können bei den Ausführungsbeispielen gemäß den Fign. 1 und 2 mit den Umschaltkontakten S11 and S12 verbundene Leitungen 13 bzw. 14 wahlweise mit der positiven und der negativen Seite oder mit der negativen und der positiven Seite einer Gleichspannungsquelle 15, beispielsweise in Form einer Kraftfahrzeugbatterie, verbunden werden. Durch eine nicht gezeichnete Federvorrichtung werden die Umschaltkontakte S11 und S12 selbsttätig in die in den Fign. 1 und 2 gezeichnete 0-Position zurückgestellt. Der Antriebsmotor 6 liegt zwischen den Leitungen 13, 14 in Reihe mit einem Kontakt rs eines Relais RS. Der Relaiskontakt rs trennt, wei veranschaulicht, bei abgefallenem Relais RS den Motorstromkreis auf und schließt einen über eine Leitung 16 führenden induktiven Bremsstromkreis. Bei dem Relais RS handelt es sich um ein normales Gleichstromrelais, das bei Anliegen einer für seine Betätigung ausreichenden Spannung den Schaltkontakt rs bezüglich des Motorstromkreises schließt und den Kontakt rs in eine den Motorstromkreis unterbrechende Stellung (Fig. 1) bringt, wenn die an dem Relais RS anliegende Spannung auf einen Wert absinkt, bei dem der Haltestrom des Relais unterschritten wird. Befindet sich der Schaltkontakt rs in seiner den Motorstromkreis schließenden Arbeitsstellung, wird durch Betätigen des Schalters S1 und den Antriebsmotor 6 Spannung mit der einen oder der anderen Polung angelegt und dementsprechend der Motor in der einen oder anderen Drehrichtung zum Laufen gebracht.

An die Umschaltkontakte S11, S12 des Umpol-Betätigungsschalters S1 ist zusammen mit dem Steuerstromkreis (Leitung 17) des Relais RS eine Transistoren T1, T2 und T3 aufweisende Relaisbetätigungsstufe über eine Vollweggleichrichterbrücke, bestehend aus Dioden D1, D2, D3 und D4, parallel zu dem Motorstromkreis angeschlossen. Dabei ist mit dem positiven Ausgang 18 der Vollweggleichrichterbrücke eine Leitung 19 verbunden, während an den negativen Ausgang 20 der Brücke eine Leitung 21 angeschlossen ist. Die Basis des Transistors T1 steht über eine Reihenschaltung aus einem Kondensator C1 und einem Widerstand R1 mit der Leitung 19 sowie über einen Kondensator C2 mit der Leitung 21 in Verbindung. Der Kollektor des Transistors T1 ist über einen Widerstand R2 an die Leitung 10 angeschlossen; der Emitter des Transistors R1 ist über einen Widerstand R3 mit der Leitung 21 verbunden. Gegebenenfalls kann der Emitter des Transistors T1 an die Leitung 21 auch unmittelbar angeschlossen sein, d.h. der Widerstand R3 entfallen. Die Basis des Transistors T2 ist mit dem Kollektor des Transistors T1 über einen Widerstand R7 verbunden. Der Kollektor des Transistors T2 ist über einen Widerstand R4 an den Koppelpunkt 22 zwischen dem Kondensator C1 und dem Widerstand R1 sowie über einen Widerstand R5 an die Leitung 19 angeschlossen. Der Emitter des Transistors T2 steht mit der Leitung 21 in unmittelbarer Verbindung. Die Basis des Transistors T3 ist an den Kollektor des Transistors T2 über einen Widerstand R6 angeschlossen. Der Emitter des Transistors T3 steht mit der Leitung 21 über eine Diode D5 in Verbindung, die gleichpolig zu der Emitterdiode des Transistors T3 gepolt ist. Der Kollektor des Transistors T3 ist mit der Basis des Transistors T1 über eine Diode D6 verbunden. Er ist ferner an einen Koppelpunkt 23 zwischen der Wicklung des Relais RS und einem Lageerkennungsschalter S2 angeschlossen. Die eine Seite der Relaiswicklung steht über die Leitung 17 unmittelbar mit der Leitung 19 in Verbindung. Die andere Seite der Relaiswicklung kann über den Schalter S2 an die Leitung 21 angeschlossen werden. Der Lageerkennungsschalter S2 wird in Abhängigkeit von der Stellung des Deckels 10 derart betätigt, daß er in einer vorbestimmten Bezugsstellung des Deckels 10 öffnet und in allen anderen Deckelstellungen schließt. Im Falle des beispielshalber veranschaulichten Schiebehebedaches ist die Bezugsstellung die in Fig. 5 gezeigte Schließstellung des Deckels. Parallel zu der Relaiswicklung liegt eine Diode D7.

Zur Erläuterung der Funktionsweise der Betätigungsvorrichtung nach Fig. 1 sei angenommen, daß der Deckel 10 zunächst in der Schließstellung (Fig. 5) steht und der Betätigungsschalter S1 die dargestellte 0-Position einnimmt. Der Schalter S2 ist offen. Das Relais RS ist abgefallen. Der Motorstromkreis ist unterbrochen. Durch Betätigen des Umpolschalters S1 von Hand in der einen oder der anderen Richtung wird über die Vollweggleichrichterbrücke D1 bis D4 ein als Setzsignal wirkender kurzzeitiger positiver Impuls über die als dynamischer Eingang der Relaisbetätigungsstufe wirkende Reihenschaltung aus Kondensator C1 und Widerstand R1 auf die Basis des Transistors T1 gegeben. Dadurch wird am Ausgang (Kollektor) des Transistors T1 ein Low erzeugt, das auf den Eingang (Basis) des Transistors T2 gekoppelt wird. Der Transistor T2 erzeugt seinerseits an seinem Ausgang (Kollektor) ein High, das über den Widerstand R6 auf die Basis des Transistors T3 gekoppelt wird. Der Transistor T3 steuert durch und bringt das Relais RS zum Anziehen. Gleichzeitig wird vom Kollektor des Transistors T2 das High über die Reihenschaltung der Widerstände R4 und R1 an die Basis des Transistors T1 zurückgeführt. Die Widerstände R4 und R1 bilden auf diese Weise eine Selbsthalteschleife, welche die Relaisbetätigungsstufe nach dem Setzen in gesetztem Zustand hält, bis eine weiter unten erläuterte Rückstellung erfolgt. Über den Schaltkontakt rs des Relais wird der Motorstromkreis geschlossen. Der Motor läuft in der durch die Betätigungsrichtung des Schalters S1 vorgegebenen Drehrichtung an und verstellt über das Antriebskabel 7 den Deckel 10. Nach Beendigung des Anfahrvorgangs wird aufgrund der Deckelbewegung der Lageerkennungsschalter S2 geschlossen. Dadurch wird das Relais RS angezogen gehalten. Gleichzeitig wird vom Koppelpunkt 23 aus ein Rückstellsignal (Low) über die Diode D6 und eine Leitung 24 auf die Basis des Transistors T1 zurückgekoppelt. Die Leitung 24 bildet dabei einen statischen Eingang der Relaisbetätigungsstufe T1, T2, T3.

Für die sichere Funktion der Betätigungsvorrichtung ist es wesentlich, sicherzustellen, daß bei offenem Lageerkennungsschalter S2 die Diode D6 gesperrt bleibt, und zwar auch bei den in Kraftfahrzeugen auftretenden starken Temperaturänderungen. Diesem Problem wird mit der Diode D5 begegnet. Durch die an der Diode D5 in Durchlaßrichtung abfallende Spannung wird bei offenem Lageerkennungsschalter S2 das Potential am Koppelpunkt 23 und damit an der Kathode der Diode D6 auf einen die Diode D6 sicher sperrenden Wert hochgezogen. Eine Temperaturdrift tritt in den Dioden D5 und D6 gleichsinnig auf. Dadurch wird eine die Diode D6 zuverlässig sperrende Potentialdifferenz an dieser Diode bei offenem Schalter S2 unabhängig von Temperaturänderungen erhalten. Gegebenenfalls kann die Diode D5 auch im Kollektorkreis des Transistors T3 liegen.

Die der Rückkopplung der Setz-Funktion dienenden Widerstände R4 und R1 sollten vorzugsweise in einem Verhältnis von etwa 1:2 bis 1:3 dimensioniert sein. Um die von dem Transistor T3 gebildete Relais-Treiberstufe gegenüber der Flip-Flop-ähnlichen Vorstufe T1, T2 wirkungsvoll zu entkoppeln, sollte der Widerstand R6 einen relative hohen Wert haben. Dadurch wird erreicht, daß der über den Transistor T2 fließende Strom wesentlich größer als der zur Basis des Transistors T3 fließend Strom ist.

Vorzugsweise stehen diese Ströme in einem gegenseitigen Verhältnis in der Größenordnung von 10:1. Der Kondensator C2 dient dem Entprellen des Lageerkennungsschalters S2. Die Diode D7 wirkt als Löschdiode für das Relais RS.

Nachdem der deckel 10 die Bezugsstellung verlassen und der Lageerkennungsschalter S2 geschlossen hat, ist die Relaisbetätigungsstufe T1, T2, T3 zurückgestellt. Der Motor 6 wird in beliebiger Drehrichtung nur noch durch den Umpol-Betätigungsschalter S1 gesteuert. Fährt der Deckel 10 in dei Bezugsstellung ein, öffnet der Lageerkennungsschalter S2. Das Relais RS wird abgeworfen. Der Kontakt rs unterbricht den Motorstromkreis. Die Motorwicklung wird zwecks induktiver Bremsung über die Leitung 16 kurzgeschlossen.

Während bei der Ausführungsform nach Fig. 1 die den Ausgangskreis der Relaisbetätigungsstufe bildende Kollektor-Emitter-Strecke des Transistors T3 parallel zu dem Lageerkennungsschalter S2 geschaltet ist, zeigt die Fig. 2 eine Schaltungsauslegung, bei welcher die Kollektor-Emitter-Strecke des Transistors T3 und der Lageerkennungsschalter S2 in Reihe geschaltet sind. Dabei weist der Schalter S2 einen Umschaltkontakt 26 auf, der, solange der Deckel 10 in der Bezugsstellung (Schließstellung) steht, an einem Kontakt 27 anliegt und dadurch die Kollektor-Emitter-Strecke des Transistors T3 in Reihe mit der Wicklung des Relais RS legt. Der Umschaltkontakt 26 schaltet auf einen mit der Leitung 21 verbundenen Kontakt 28 um, nachdem der Deckel 10 die Bezugsstellung verlassen hat.

Steht der Deckel 10 in einer von der Bezugsstellung abweichenden Stellung und liegt dementsprechend der Umschaltkontakt 26 an dem Kontakt 28 an, geht über die Diode D6 und die Leitung 24 ein Rückstellsignal an den Transistor T1. Über die Transistoren T1 und T2 wird der Transistor T3 gesperrt. Wird nunmehr der Betätigungsschalter S1 in der einen oder der anderen Richtung betätigt, wird in der anhand der Fig. 1 erläuterten Weise die von den Transistoren T1 und T2 gebildete Transistorlogikstufe so gesetzt, daß der Transistor T3 durchschaltet. Infolgedessen fließt Strom über die Reihenschaltung, die aus der Wicklung des Relais RS, dem Lageerkennungsschalter S2 und der Kollektor-Emitter-Strecke des Transistors T3 besteht. Das Relais RS zieht an; über den Relaiskontakt rs wird der Motor 6 eingeschaltet. Der Motor 6 läuft, bis entweder der Betätigungsschalter S1 in seine Null-Stellung zurückkehrt oder der Deckel die Schließstellung erreicht und der Lageerkennungsschalter S2 umschaltet. Im letztgenannten Fall geht über die Diode D6 wieder ein Rückstellsignal an die Basis des Transistors D1. Bei dieser Ausführungsform können die Diode D5 und der Widerstand R3 entfallen.

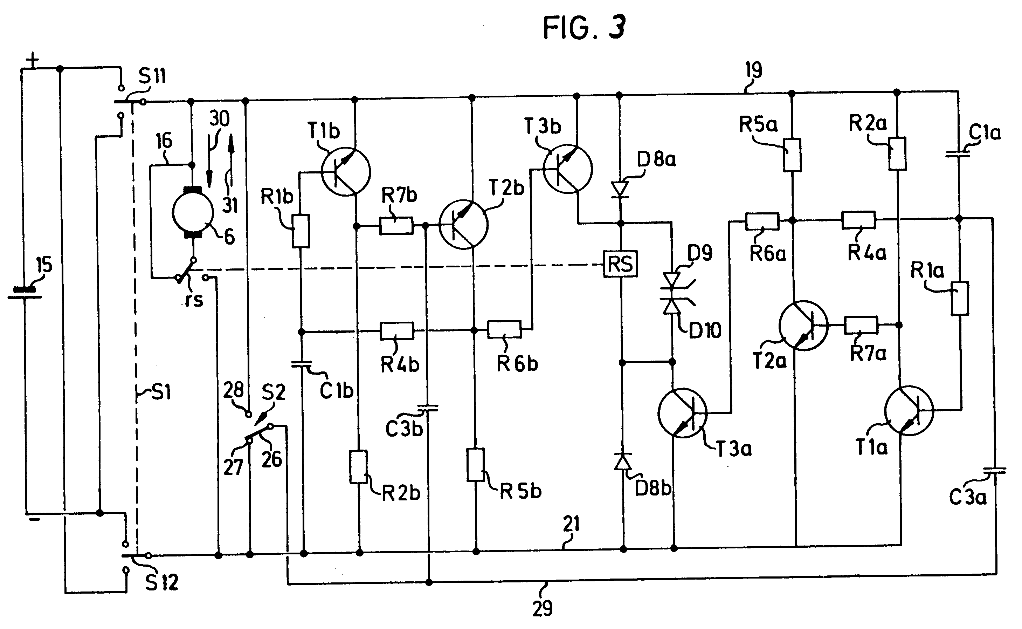

Bei der abgewandelten Ausführungsform gemäß Fig. 3 weist die Relaisbetätigungsstufe zwei spiegelsymmetrisch angeordnete Schaltungseinheiten auf, die ähnlich der Relaisbetätigungsstufe gemäß Fig. 1 sind. Für entsprechende Schaltungskomponenten der beiden Schaltungseinheiten sind die gleichen Bezugszeichen wie in Fig. 1, ergänzt durch den Buchstaben "a" bzw. "b", verwendet. Die Leitungen 19, 21 sind unter Weglassung der Vollweggleichrichterbrücke D1, D2, D3, D4 an die Umschaltkontakte S11 bzw. S12 des Umpol-Betätigungsschalters S1 unmittelbar angeschlossen. Der Lageerkennungsschalter S2 weist als Schaltglied einen Umschaltkontakt 26 auf, der in der Bezugsstellung des Deckels 10 - bei dem Ausführungsbeispiel gemäß den Fign. 4 bis 6 also in der Schließstellung der Fig. 5 - an einem mit der Leitung 21 verbundenen Kontakt 27 anliegt und der bei Verlassen der Bezugsstellung auf einen mit der Leitung 19 verbundenen Kontakt 28 umgestellt wird. Der Umschaltkontakt 26 ist an eine Leitung 29 angeschlossen, die mit je einem über einen Kondensator C3a und C3b führenden dynamischen Eingang der beiden Schaltungseinheiten T1a, T2a, T3a bzw. T1b, T2b, T3b verbunden ist. Die Dioden D5, D6 und D7 der Anordnung nach Fig. 1 entfallen. Die eine Seite der Wicklung des Relais RS steht über die Kollektor-Emitter-Strecke des Transistors T3a mit der Leitung 21 in Verbindung, während die andere Seite der Relaiswicklung über die Kollektor-Emitter-Strecke des Transistors T3b an die Leitung 19 angeschlossen ist. Parallel zu den Kollektor-Emitter-Strecken der Transistoren T3a und T3b liegt jeweils eine Diode D8b bzw. D8a. Parallel zu der Wicklung des Relais RS liegen zwei gegenpolig in Reihe geschaltete Z-Dioden D9 und D10. Der Kollektor des Transistors T1a ist mit der Basis des Transistors T2a über einen Widerstand R7a verbunden. In analoger Weise ist zwischen den Kollektor des Transistors T1b und die Basis des Transistors T2b ein Widerstand R7b geschaltet.

Zur Funktionserläuterung sei angenommen, daß der Antriebsmotor die Transportbrücke 8 nach hinten verschiebt, wenn der Umschaltkontakt S11 mit der positiven und der Umschaltkontakt S12 mit der negativen Klemme der Stromquelle 15 verbunden wird, während die Transportbrücke 8 nach vorne verstellt wird, wenn der Umschaltkontakt S11 mit der negativen Seite und der Umschaltkontakt S12 mit der positiven Seite der Stromquelle 15 in Verbindung gebracht wird. Es sei ferner angenommen, daß der Deckel 19 zunächst in der Bezugsstellung (Schließstellung gemäß Fig. 5) steht und von dort entsprechend Fig.4 nach hinten geschoben werden soll.

In der Schließstellung des Deckels 1o liegt der Umschaltkontakt 26 des Lageerkennungsschalters S2 an dem Kontakt 27 an. Wird in diesem Ausgangszustand der Betätigungsschalter S1 in Fig.3 nach oben verstellt, d.h. der Umschaltkontakt S11 an die positive Seite und der Umschaltkontakt S12 an die negative Seite der Stromquelle 15 angeschlossen, geht über die Leitung 19 und den über den Kondensator C1a führenden dynamischen Eingang der in Fig.3 rechten Schaltungseinheit der Relaisbetätigungsstufe ein kurzzeitiger positiver Impuls auf die Basis des Transistors T1a. Die Basis dieses Transistors wird kurzzeitig auf High gezogen. Das dadurch verursachte Low am Kollektor des Transistors T1a wird über den Widerstand R7a auf die Basis des Transistors T2a gekoppelt. Der Kollektor des Transistors T2a geht auf High. Dieses Signal wird an die Basis des Transistors T3a angelegt, der infolgedessen durchschaltet. Gleichzeitig wird das High vom Kollektor des Transistors T2a über die Widerstände R4a und R1a aufweisende Selbsthalteschleife zu der Basis des Transistors T1a zurückgekoppelt, so daß der durch den positiven Impuls an der Basis des Transistors T1a ausgelöste Setz-Zustand aufrecht erhalten bleibt. Von der positiven Seite der Gleichspannungsquelle 15 fließt Strom über den Umschaltkontakt S11, die Diode D8a, die Wicklung des Relais RS und die Kollektor-Emitter-Strecke des Transistors T3a zur Leitung 21 sowie von dort über den Umschaltkontakt S12 zur negativen Seite der Gleichspannungsquelle 15. Das Relais RS zieht an und wird im angezogenen Zustand gehalten. Der Relais-Schaltkontakt rs schließt den Stromkreis des Antriebsmotors 6. Über den Motor 6 fließt Strom in der durch den Pfeil 3o angedeuteten Richtung. Der Motor 6 fährt an. Über das Antriebskabel 7 wird die Transportbrücke 8 nach hinten verstellt. Der Deckel 1o wird abgesenkt und entsprechend Fig.4 nach hinten geschoben. Während der erläuterten Vorgänge ist die in Fig. 3 auf der linken Seite veranschaulichte Schaltungseinheit mit den Transistoren T1b, T2b und T3b außer Funktion gesetzt, weil durch das hohe Potential auf der Leitung 19 und das niedrige Potential auf der Leitung 21 die Transistoren T1b, T2b und T3b gesperrt sind.

Wenn der Deckel 1o die Schließstellung verlassen hat, schaltet der Lageerkennungsschalter S2 um; der Umschaltkontakt 26 wird von dem Kontakt 27 auf den Kontakt 28 umgelegt. Der Deckel 1o kann in jeder beliebigen Zwischenstellung gestoppt werden, indem der Betätigungsschalter S1 in die in Fig.3 gezeigte 0-Position gebracht und dadurch der Antriebsmotor 6 stromlos gemacht wird. Um beispielsweise den Dekkel 1o von einer solchen Zwischenstellung zwischen der Schließlage der Fig.5 und der voll zurückgeschobenen Stellung gemäß Fig.4 weiter nach hinten zu schieben, wird der Betätigungsschalter S1 wieder so verstellt, daß über den Umschaltkontakt S11 die Leitung 19 mit der positiven sowie über den Umschaltkontakt S12 die Leitung 21 mit der negativen Seite der Spannungsquelle 15 verbunden wird. Über den jetzt mit dem Kontakt 28 in Verbindung stehenden Umschaltkontakt 26 des Lageerkennungsschalters S2 wird die Basis des Transistors T1a über den von dem Kondensator C3a gebildeten dynamischen Eingang mit einem positiven Impuls beaufschlagt, so daß das Relais RS in der zuvor geschilderten Weise zum Anziehen gebracht und angezogen gehalten wird. Soll der Deckel 1o aus der voll zurückgeschobenen Stellung oder einer Zwischenstellung zwischen den Positionen gemäß den Fig. 4 und 5 in die Schließlage zurückgebracht werden, wird der Umpol-Betätigungsschalter S1 in Fig.3 nach unten verstellt. Über den Umschaltkontakt S11 wird die Leitung 19 mit der negativen Seite der Gleichspannungsquelle 15 verbunden, während die Leitung 21 über den Umschaltkontakt S12 an die positive Seite der Spannungsquelle 15 angeschlossen wird. Über den Umschaltkontakt S11 und den an dem Kontakt 28 anliegenden Umschaltkontakt 26 des Lageerkennungsschalters S2 geht an die Basis des Transistors T2b ein Low-Impuls über den den Transistor C3b aufweisenden dynamischen Eingang. Das Low an der Basis des Transistors T2b führt zu einem High am Kollektor dieses Transistors, das über den Widerstand R6b auf die Basis des Transistors T3b übertragen wird. Der Transistor T3b steuert durch. Strom fließt von der posiven Seite der Gleichspannungsquelle 15 über den Umschaltkontakt S12, die Leitung 21, die Diode D8b, die Wicklung des Relais RS, den durchgesteuerten Transistor T3b, die Leitung 19 und den Umschaltkontakt S11 zur negativen Seite der Gleichspannungsquelle 15.Das Relais RS zieht an. Der Relaiskontakt rs schließt den Motorstromkreis. Strom fließt durch den Motor in Richtung des Pfeils 31. Der Deckel 1o wird in Richtung auf die Schließstellung verstellt.

Wird der Betätigungsschalter S1 in der zuletzt erläuterten Stellung gehalten, setzt der Deckel 1o seine Bewegung fort, bis er die Schließstellung (Fig.5) erreicht. Dadurch wird der Umschaltkontakt 26 des Lageerkennungsschalters S2 von dem Kontakt 28 auf den Kontakt 27 umgelegt. Von der positiven Seite der Spannungsquelle 15 geht über den Umschaltkontakt S12, den Lageerkennungsschalter S2 und die Leitung 29 ein Rückstellsignal in Form eines positiven Impulses über den den Kondensator C3b aufweisenden dynamischen Eingang der in Fig.3 linken Schaltungseinheit auf die Basis des Transistors T2b. Dies führt zu einem Low am Kollektor des Transistors T2b, das über den Widerstand R6b an die Basis des Transistors T3b angekoppelt wird. Der Transistor T3b wird gesperrt. Nachdem der Transistor T3a ohnehin gesperrt ist, wird das Relais RS abgeworfen. Der Umschaltkontakt rs trennt den Motorstromkreis auf und macht über die Leitung 16 die induktive Bremse wirksam.Der Deckel 1o wird augenblicklich stillgesetzt. Das Low-Signal vom Ausgang des Transistors T2b wird über die Widerstände R4b und R1b auf die Basis des Transistors T1b zurückgekoppelt, wodurch die die Transistoren T1b, T2b und T3b aufweisende linke Schaltungseinheit der Relaisbetätigungsstufe im zurückgestellten Zustand gehalten wird. Wenn der Betätigungsschalter S1 losgelassen wird und dadurch in seine 0-Position zurückkehrt, wird auch der Transistor T2b stromlos.

Um den Deckel 1o ausgehend von der Schließstellung auszustellen (Fig.6) wird der Betätigungsschalter S1 in Fig.3 nach unten umgestellt. Ein Setz-Signal in Form eines kurzzeitigen positiven Impulses geht von der positiven Seite der Gleichspannungsquelle 15 über den Umschaltkontakt R12 an den über den Kondensator C1b führenden dynamischen Eingang. Der Transistor T1b wird durchgesteuert. Das Low am Kollektor des Transistors T1b bewirkt ein High am Kollektor des Transistors T2b. Dieses Signal wird über die Widerstände R4b und R1b auf die Basis des Transistors T1b zurückgekoppelt und steuert ferner den Transistor T3b durch. Strom fließt von der Leitung 21 über die Diode D8b, die Wicklung des Relais RS und den durchgesteuerten Transistor T3b zur Leitung 19. Über den Relaiskontakt rs wird der Motorstromkreis geschlossen. Der Motor 6 wird in der Richtung des Pfeils 31 vom Strom durchflossen. Über das Antriebskabel 7 wird die Transportbrücke 8 weiter nach vorne gezogen. Der Deckel 10 wird ausgestellt. Nach dem Anfahren wird der Umschaltkontakt 26 des Lageerkennungsschalters S2 von dem Kontakt 27 auf den Kontakt 28 umgestellt. Wird über den Umpol-Betätigungsschalter S1 die Leitung 19 mit der positiven Seite und die Leitung 21 mit der negativen Seite der Spannungsquelle 15 verbunden, wird die Transportbrücke 8 ausgehend von der in Fig.6 gezeigten Lage oder einer Zwischenstellung zwischen der voll ausgestellten Lage und der Schließstellung in Richtung auf die Schließstellung zurückbewegt. Wird dabei die Schließstellung erreicht, schaltet der Lageerkennungsschalter S2 von dem Kontakt 28 auf den Kontakt 27 um. Über den Umschaltkontakt S12, den Lageerkennungsschalter S2, die Leitung 29 und den Kondensator C3a geht ein als Rückstellsignal wirkender kurzzeitiger negativer Impuls an die Basis des Transistors T1a. Dieser Transistor wird gesperrt. Das High am Kollektor des Transistors T1a steuert den Transistor T2a auf. Durch das Low-Signal am Kollektor des Transistors T2a wird über den Widerstand R6a der Transistor T3a gesperrt. Das Relais RS wird abgeworfen. Über den Relaiskontakt rs wird der Motorstromkreis unterbrochen. Der Deckel 1o wird in der Schließstellung stillgesetzt. Bei der Schaltungsauslegung gemäß Fig.3 überbrücken die Dioden D8a und D8b den jeweils gesperrten parallel geschalteten Transistor T3b bzw. T3a. Die Diode D8a ist in der gleichen Richtung gepolt wie die Emitterdiode des Transistors T3a. Entsprechendes gilt für die Diode D8b und den Transistor T3b. Die Z-Dioden D9 und D1o sorgen für eine bipolare Funkenlöschung der Induktionsspannung beim Abfallen des Relais RS.

Bei allen Ausführungsbeispielen sind npn-Transistoren vorgesehen. Es versteht sich jedoch, daß die Schaltungen in analoger Weise auch mit pnp-Transistoren aufgebaut werden können. Die Ausführungsbeispiele gemäß den Fign.1 bis 3 verwenden diskrete Schaltungskomponenten. Stattdessen können grundsätzlich auch standardisierte integrierte Schaltungen herangezogen werden. Ein diskreter Schaltungsaufbau hat den Vorteil, daß höhere Temperaturen und höhere Spannungen bzw. Spannungsspitzen toleriert werden können. Mit diskreten Schaltungskomponenten lassen sich auch hohe Ströme verarbeiten, wodurch Störungen unschädlich gemacht werden, die bei Kraftfahrzeugnäpfen auftreten können. Die offenbarte Schaltungskonzeption gestattet ferner eine Miniaturisierung durch die Verwendung von SMD-Bauelementen. Im Ruhezustand, d.h. bei in seiner 0-Position stehendem Betätigungsschalter S1, ist im Falle beider Ausführungsformen die gesamte Schaltung stromlos, so daß auch keine Störung eingekoppelt werden kann. Die Ausführungsformen gemäß den Fign. 1 und 2 haben darüber hinaus den Vorzug, daß die elektronische Relaisbetätigungsstufe nur für das Anfahren aus der Bezugsstellung aktiv gemacht wird. Infolgedessen kann der aus der Schließstellung gemäß Fig.5 herausgebrachte (zurückgeschobene oder ausgestellte) Deckel 1o durch manuelles Betätigen des Schalters S1 immer geschlossen werden.

Es versteht sich, daß die erläuterte Betätigungsvorrichtung nicht auf eine spezielle Art des Antriebs (Transportbrücke 8, Ausstellhebel 9) beschränkt ist, sondern auch in Verbindung mit beliebigen anderen Antrieben verwendet werden kann. Daneben eignet sich die Betätigungsvorrichtung für beliebige Dachausbildungen, so z.B. für einfache Schiebedächer, einfache Hebedächer oder sogenannte Spoiler-oder Oberfirstdächer, bei denen der Deckel aus der Schließstellung ausgeschwenkt und dann über der festen Dachfläche nach hinten geschoben wird. Im letztgenannten Falle wird als Bezugsstellung zweckmäßig die voll ausgestellte Lage des in seiner vorderen Endstellung stehenden Deckels verwendet.

**Patentansprüche**

1. Betätigungsvorrichtung für bewegbare Teile (10) zum Schließen von Öffnungen, wie Fenstern, Türen oder Dachöffnungen, in Fahrzeugen, mit einem in seiner Drehrichtung umsteuerbaren Gleichstrom-Antriebsmotor (6) zum Antreiben des bewegbaren Teils, einem im Motorstromkreis liegenden Umpol-Betätigungsschalter (51) zum Anlegen einer Gleichspannung an den Motorstromkreis mit einer wahlweise der einen oder der anderen Motordrehrichtung entsprechenden Polung, einem Relais (RS), das einen im Motorstromkreis in Reihe mit dem Umpol-Betätigungsschalter liegenden Schaltkontakt (rs) aufweist, sowie einer mit dem Steuerstromkreis des Relais in Verbindung stehenden Lageerkennungsstufe (52) zum Betätigen des Relais in einer vorbestimmten Bezugsstellung des bewegbaren Teils zwecks selbsttätiger stillsetzung des Antriebsmotors in dieser Bezugsstellung durch öffnen des Schaltkontakts, wobei als Relais (RS) ein Gleichstromrelais vorgesehen ist, das bei Anliegen eines ersten Spannungspegels an seinem Steuerstromkreis den Schaltkontakt (rs) schließt und bei Anliegen eines zweiten Spannungspegels an seinem Steuerstromkreis den Schaltkontakt öffnet, und wobei mit dem Steuerstromkreis des Relais (RS) eine elektronische Relaisbetätigungsstufe (T1, T2, T3; T1a, T2a, T3a,T1b, T2b, T3b) mit Speicherverhalten verbunden ist, die eingangsseitig mindestens dann, wenn das bewegbare Teil (10) in der Bezugsstellung steht, durch Schließen des Umpol-Betätigungsschalters (S1) in der einen oder der anderen Richtung mit einem Setzsignal beaufschlagt wird, aufgrund dessen die Relaisbetätigungsstufe an den Steuerstromkreis des Relais den ersten Spannungspegel anlegt, dadurch gekennzeichnet, daß die Relaisbetätigungsstufe (T1, T2, T3; T1a, T2a, T3a, T1b, T2b, T3b) in Abhängigkeit von der Position des bewegbaren Teiles (Deckel 10) mindestens so lange im gesetzten Zustand gehalten ist, bis das bewegbare Teil die Bezugsstellung verlassen hat.

2. Betätigungsvorrichtung nach Anspruch 1, dadurch gekennzeichnet, daß der Ausgangskreis der Relaisbetätigungsstufe in Reihe mit der Lageerkennungsstufe (Lageerkennungsschalter S2) geschaltet ist.

3. Betätigungsvorrichtung nach Anspruch 1, dadurch gekennzeichnet, daß der Ausgangskreis der Relaisbetätigungsstufe parallel zu der Lageerkennungsstufe (Lageerkennungsschalter S2) geschaltet ist.

4. Betätigungsvorrichtung nach einem der vorhergehenden Ansprüche, dadurch gekennzeichnet, daß die Lageerkennungsstufe (Lageerkennungsschalter S2) das Relais (RS) abfallen läßt, wenn das bewegbare Teil (Deckel 10) in die Bezugsstellung einläuft, und daß der den Antriebsmotor (6) einund ausschaltende Schaltkontakt (rs) als Schließer ausgebildet ist.

5. Betätigungsvorrichtung nach einem der vorhergehenden Ansprüche, dadurch gekennzeichnet, daß die Lageerkennungsstufe einen Schalter (S2) aufweist, der bei in der Bezugsstellung stehendem bewegbarem Teil (Deckel 10) eine erste Schaltstellung und bei aus der Bezugsstellung herausbewegtem bewegbarem Teil eine zweite Schaltstellung einnimmt.

6. Betätigungsvorrichtung nach Anspruch 5, dadurch gekennzeichnet, daß der Lageerkennungsschalter (S2) mit der Wicklung des Relais (RS) unmittelbar in Reihe geschaltet ist.

7. Betätigungsvorrichtung nach Anspruch 5, dadurch gekennzeichnet, daß der Lageerkennungsschalter (S2) auf das Relais (RS) über die elektronische Relaisbetätigungsstufe einwirkt.

8. Betätigungsvorrichtung nach einem der vorhergehenden Ansprüche, dadurch gekennzeichnet, daß die Relaisbetätigungsstufe mindestens einen mit dem Umpol-Betätigungsschalter (S1) in Verbindung stehenden dynamischen Eingang (Kondensator C1; Kondensatoren C1a, C1b) aufweist.

9. Betätigungsvorrichtung nach einem der vorhergehenden Ansprüche, dadurch gekennzeichnet, daß die Relaisbetätigungsstufe mit einer SElbsthalteschleife (Widerstände R1, R4; R1a, R4a, R1b, R4b) versehen ist, welche die Relaisbetätigungsstufe nach dem Setzen mindestens so lange im gesetzten Zustand hält, bis das bewegbare Teil (Deckel 10) die Bezugsstellung verlassen hat.

10. Betätigungsvorrichtung nach einem der vorhergehenden Ansprüche, dadurch gekennzeichnet, daß die Relaisbetätigungsstufe zusammen mit dem Steuerstromkreis des Relais (RS) an den Umpol-Betätigungsschalter (S1) parallel zu dem Motorstromkreis über einen Vollweggleichrichter (Dioden D1 D2, D3, D4) angeschlossen ist.

11. Betätigungsvorrichtung nach Ansprüchen 2 und 6, dadurch gekennzeichnet, daß der Lageerkennungsschalter (S2) einen Umschaltkontakt (26) aufweist, der bei in der Bezugsstellung stehendem bewegbarem Teil (Deckel 10) den Ausgangskreis der Relaisbetätigungsstufe in Reihe mit der Wicklung des Relais (RS) legt und der, nachdem das bewegbare Teil dei Bezugsstellung verlassen hat, einen über den Umpol-Betätigungsschalter (S1) führenden Relaishaltekreis schließt.

12. Betätigungsvorrichtung nach Ansprüchen 6 und 10, dadurch gekennzeichnet, daß der Lageerkennungsschalter (S2) bei in der Bezugsstellung stehendem bewegbarem Teil (10) offen ist, und daß der Lageerkennungsschalter mit einem statischen Eingang (Leitung 24) der Relaisbetätigungsstufe über eine Diode (D6) verbunden ist, die bei offenem Lageerkennungsschalter gesperrt gehalten ist.

13. Betätigungsvorrichtung nach Anspruch 12, dadurch gekennzeichnet, daß im Ausgangskreis der Relaisbetätigungsstufe ein Temperaturdrift-Kompensationsglied (Diode D5) liegt, das bei offenem Lageerkennungsschalter (S2) an der Diode (D1) unabhängig von Temperaturänderungen eine für ein sicheres Sperren der Diode (D1) ausreichende Sperrspannung aufrecht erhält.

14. Betätigungsvorrichtung nach einem der Ansprüche 1 bis 9 und 11, dadurch gekennzeichnet, daß die Relaisbetätigungsstufe zwei im wesentlichen spiegelsymmetrische Schaltungseinheiten aufweist, von denen die eine auf ein Schließen des Umpol-Betätigungsschalters (S1) in der einen Polungsrichtung und die andere auf ein Schließen des Umpol-Betätigungsschalters in der anderen Polungsrichtung anspricht.

15. Betätigungsvorrichtung nach Anspruch 14, dadurch gekennzeichnet, daß jede der beiden Schaltungseinheiten einen mit dem Umpol-Betätigungsschalter (S1) direkt verbundenen dynamischen Setzeingang (Kondensatoren C1a, C1b) und einen an die Lageerkennungsstufe (Lageerkennungsschalter S2) angeschlossenen dynamischen Rückstelleingang (Kondensatoren C3a, C3b) aufweist.

16. Betätigungsvorrichtung nach Anspruch 14 oder 15, dadurch gekennzeichnet, daß mit der Wicklung des Relais (RS) ein ausgangsseitiger gesteuerter Halbleiterschalter (Transistor T3a) der einen Schaltungseinheit und ein ausgangsseitiger gesteuerter Halbleiterschalter (Transistor T3b) der anderen Schaltungseinheit entgegengesetzt gepolt in Reihe geschaltet sind, und daß jeweils eine Diode (D8b, D8a) antiparallel zu den beiden ausgangsseitigen gesteuerten Halbleiterschaltern geschaltet ist.

## Claims

1. An actuating device for movable components (10) for closing apertures, such as windows, doors or roof apertures in vehicles, having a d.c. drive motor (6) which is reversible in its direction of rotation and which serves to drive the movable component, having a reverse polarity actuating switch (S1) situated in the motor circuit and for applying a d.c. voltage to the motor circuit with a polarity corresponding optionally to one or other direction of rotation of the motor, having a relay (RS) which has a switch contact (rs) disposed in the motor circuit in series with the reverse polarity actuating switch, and also having a position recognition stage (S2) connected to the control circuit of the relay and serving to actuate the relay in a predetermined reference position of the movable component so as to automatically arrest the drive motor in this reference position by opening the switch contact, wherein a d.c. relay is provided as the relay (RS), which closes the switch contact (rs) when a first voltage level is applied to its control circuit and which opens the switch contact when a second voltage level is applied to its control circuit, and wherein there is is connected to the control circuit of the relay (RS) an electronic relay-actuating stage (T1, T2, T3; T1a, T2a, T3a, T1b, T2b, T3b) with storage characteristics, which on the input side is actuated by a setting signal, at least when the movable component (10) is situated in the reference position, by closing the reverse polarity actuating switch (S1) in one or other direction, on the basis of which setting signal the relay-actuating stage applies the first voltage level to the control circuit of the relay, characterised in that, depending on the position of the movable component (panel 10), the relay-actuating stage (T1, T2, T3; T1a, T2a, T3a, T1b, T2b, T3b) is retained in the set position at least until the movable component has left the reference position.

2. An actuating device according to Claim 1, characterised in that the output circuit of the relay-actuating stage is connected in series with the position recognition stage (position recognition switch S2).

3. An actuating device according to Claim 1, characterised in that the output circuit of the relay-actuating stage is connected in parallel with the position recognition stage (position recognition switch S2).

4. An actuating device according to any one of the preceding Claims, characterised in that the position recognition stage (position recognition switch S2) allows the relay (RS) to drop out when the movable component (panel 10) enters the reference position, and in that the switch contact (rs) switching the drive motor (6) on and off is a closing contact.

5. An actuating device according to any one of the preceding Claims, characterised in that the the position recognition stage has a switch (S2) which, when the movable component (panel 10) is in the reference position, occupies a first switch position and which occupies a second switch position when the movable component is moved out of the reference position.

6. An actuating device according to Claim 5, characterised in that the position recognition switch (S2) is connected directly in series with the winding of the relay (RS).

7. An actuating device according to Claim 5, characterised in that the position recognition switch (S2) acts on the relay (RS) via the electronic relay-actuating stage.

8. An actuating device according to any one of the preceding Claims, characterised in that relay-actuating stage has at least one dynamic input (capacitor C1; capacitors C1a, C1b) connected with the reverse polarity actuating switch (S1).

9. An actuating device according to any one of the preceding Claims, characterised in that relay-actuating stage is provided with a self-holding loop (resistors R1, R4; R1a, R4a, R1b, R4b) which after setting holds the relay-actuating stage in the set condition until the movable component (panel 10) has left the reference position.

10. An actuating device according to any one of the preceding Claims, characterised in that the relay-actuating stage, together with the control circuit of the relay (RS), is connected to the reverse polarity actuating switch (S1) parallel to the motor circuit via a full-wave rectifier (diodes D1, D2, D3, D4).

11. An actuating device according to Claims 2 and 6, characterised in that the position recognition switch (S2) has a switching-over contact (26) which, when the movable component (panel 10) is in the reference positon, places the output circuit of the relay actuating stage in series with the winding of the relay (RS) and which, after the movable component has left the reference positon, closes a relay-holding circuit leading via the reverse polarity actuating switch (S1).

12. An actuating device according to Claims 6 and 10, characterised in that the position recognition switch (S2) is open when the movable component (10) is in the reference position, and in that the position recognition switch is connected to a static input (lead 24) of the relay-actuating stage via a diode (D6) which remains blocked while the position recognition switch is open.

13. An actuating device according to Claim 12, characterised in that a temperature drift compensating member (diode D5) is situated in the output circuit of the relay-actuating stage, which when the position recognition switch (S2) is open maintains at the diode (D1), irrespective of temperature changes, an adequate blocking voltage to ensure reliable blocking of the diode (D1).

14. An actuating device according to any one of Claims 1 to 9 and 11, characterised in that the relay-actuating stage has two substantially mirror-symmetrical circuit units, one of which responds to closing of the reverse polarity actuating switch (S1) in one polarity direction and the other one of which responds to closing of the reverse polarity actuating switch in the other polarity direction.

15. An actuating device according to Claim 14, characterised in that each of the two circuit units is provided with a dynamic setting input (capacitors C1a, C1b) directly connected to the reverse polarity actuating switch (S1) and with a dynamic resetting input (capacitors C3a, C3b) connected to the position recognition stage (position recognition switch S2).

16. An actuating device according to Claim 14 or 15, characterised in that a semiconductor switch (transistor T3a) of one circuit unit, which is controlled on the output side, and a semiconductor switch (transistor T3b) of the other circuit unit, which is controlled on the output side, are connected in series at opposite poles to the winding of the relay (RS), and in that in each case a diode (D8b, D8a) is connected in non-parallel manner to the two semiconductor switches controlled on the output side,

**Revendications**

1. Dispositif d'actionnement d'éléments mobiles (10) pour la fermeture d'ouvertures telles que des fenêtres, des portes ou des ouvertures de toit, dans les véhicules automobiles, avec un moteur d'entraînement (6) à courant continu, dont le sens de rotation peut être inversé, pour l'entraînement de l'élément mobile, avec un commutateur de commande-inverseur (S1) se trouvant dan le circuit électrique du moteur pour appliquer une tension continue au circuit électrique du moteur avec une polarité correspondant, au choix, à l'un ou l'autre sens de rotation du moteur, avec un relais (RS) qui présente un contact de commutation (rs) se trouvant dans le circuit électrique du moteur en série avec le contacteur de commande-inverseur, ainsi qu'avec un étage de reconnaissance de position (S2) se trouvant en liaison avec le circuit électrique de commande du relais pour actionner le relais dans une position de référence prédéterminée de l'élément mobile dans le but d'une mise automatique à l'arrêt du moteur d'entraînement dans cette position de référence par ouverture du contact, dispositif dans lequel il est prévu comme relais (RS) un relais à courant continu, qui ferme le contact (rs) quand on lui applique un premier niveau de tension sur son circuit électrique de commande et dans lequel un étage électronique d'actionnement du relais (T1, T2, T3; T1a, T2a, T3a; T1b, T2b, T3b) est relié au circuit de commande du relais (RS) avec mémorisation qui ensuite est actionné par un signal de mise en état, quand l'élément mobile (10) se trouve dans la position de référence, par la fermeture du commutateur de commande-inverseur (S1) dans l'un ou l'autre sens, signal de mise en état en raison duquel l'étage d'actionnement du relais applique sur le circuit électrique de commande de relais le premier niveau de tension, dispositif d'actionnement caractérisé en ce que l'étage d'actionnement du relais (T1, T2, T3; T1a, T2a, T3a; T1b, T2b, T3b) est maintenu dans la position établie en fonction de la position de l'élément mobile (couvercle 10) jusqu'à ce que l'élément mobile ait quitté la position de référence.

2. Dispositif d'actionnement selon la revendication 1, caractérisé en ce que le circuit de départ de l'étage d'actionnement du relais est monté en série avec l'étage de reconnaissance de position (commutateur S2 de reconnaissance de position).

3. Dispositif d'actionnement selon la revendication 1, caractérisé en ce que, le circuit de départ de l'étage d'actionnement du relais est monté en parallèle à l'étage de reconnaissance de position (commutateur de reconnaissance de position 52).

4.  Dispositif d'actionnement selon l'une des revendications précédentes, caractérisé en ce que l'étage de reconnaissance de position (commutateur de reconnaissance de position S2) laisse retomber le relais (RS), quand l'élément mobile (couvercle 10) arrive à la position de référence, et en ce que le contact (rs) qui met sous courant et hors courant le moteur d'entraînement (6) est constitué comme un contacteur.

5.  Dispositif d'actionnement selon l'une des revendications précédentes, caractérisé en ce que l'étage de reconnaissance de position présente un commutateur (S2), qui, quand l'élément mobile se trouve dans la position de référence (couvercle 10) prend un première position de commutation et quand l'élément mobile sort de la position de référence prend une deuxième position de commutation.

6.  Dispositif d'actionnement selon la revendication 5, caractérisé en ce que le commutateur de reconnaissance de position (S2) est monté directement en série avec l'enroulement du relais (RS).

7.  Dispositif d'actionnement selon la revendication 5, caractérisé en ce que le commutateur de reconnaissance de position (S2) agit sur le relais (RS) via l'étage d'actionnement électronique du relais.

8.  Dispositif d'actionnement selon l'une des revendications précédentes, caractérisé en ce que l'étage d'actionnement du relais présente au moins une entrée dynamique (condensateur $C_1$; condensateurs C1a, C1b) se trouvant en liaison avec le commutateur de commande-inverseur (S1).

9.  Dispositif d'actionnement selon l'une des revendications précédentes, caractérisé en ce que l'étage d'actionnement du relais est pourvu d'une boucle à auto-maintien (résistances R1, R4; R1a, R4a, R1b, R4b) qui maintient dans l'état établi l'étage d'actionnement du relais après la mise en état au moins jusqu'à ce que l'élément mobile (couvercle 10) ait quitté la position de référence.

10. Dispositif d'actionnement selon l'une des revendications précédentes, caractérisé en ce que l'étage d'actionnement du relais est raccordé en même temps que le circuit de commande du relais (RS) au commutateur de commande- inverseur (S1) en parallèle au circuit électrique du moteur par l'intermédiaire d'un redresseur à pleine onde (diodes D1, D2, D3, D4).

11. Dispositif d'actionnement selon les revendications 2 et 6, caractérisé en ce que le commutateur de reconnaissance de position (S2) présente un contact de commutation (26), qui, quand l'élément mobile (couvercle 10) se trouve dans la position de référence, met en série avec l'enroulement du relais (RS) le circuit de départ de l'étage d'actionnement du relais et qui, quand l'élément mobile a quitté la position de référence, ferme un circuit de maintien du relais passant par le commutateur de commande-inverseur (S1).

12. Dispositif d'actionnement selon les revendications 6 à 10, caractérisé en ce que le commutateur de reconnaissance de position (S2), quand l'élément mobile (10) se trouve dans la position de référence, est ouvert et en ce que le commutateur de reconnaissance de position est relié à une entrée statique (conducteur 24) de l'étage d'actionnement du relais par une diode (D6), qui est maintenue bloquée quand le commutateur de reconnaissance de position est ouvert.

13. Dispositif d'actionnement selon la revendication 12, caractérisé en ce qu'un organe de compensation de dérive de température (Diode D5) se trouve dans le circuit de départ de l'étage d'actionnement du relais, organe qui, quand le commutateur de reconnaissance de position (S2) est ouvert, maintient une tension de blocage suffisante pour un blocage sûr de la diode (D1) indépendamment des variations de température.

14. Dispositif d'actionnement selon l'une des revendications 1 à 9 et 11, caractérisé en ce que l'étage d'actionnement du relais présente deux unités de commutation sensiblement symétriques, dont l'une est excitée lors de la fermeture du commutateur de commande-inverseur (S1) dans l'un des sens de polarisation et l'autre est excitée lors de la fermeture du commutateur de commande-inverseur dans l'autre sens de polarisation.

15. Dispositif d'actionnement selon la revendication 14, caractérisé en ce que chacune des deux unités de commutation présente une entrée (condensateurs C10, C1b) dynamique directement reliée au commutateur de commande-inverseur (S1) et une entrée de remise à l'état (condensateurs C3a, C3b) dynamique raccordée à l'étage de reconnaissance de position (commutateur de reconnaissance de position S2).

16. Dispositif d'actionnement selon la revendication 14 ou 15, caractérisé en ce qu'un commutateur à semi-conducteur (transistor T3a) commandé du côté sortie de l'une des unités de commutation un commutateur à semi-conducteur (transistor T3b) commandé du côté sortie de l'autre unité de commutation polarisé en sens opposé sont mis en circuit en série avec l'enroulement dr relais (RS) et en ce que, au moins une diode (D8b, D8a) anti-parallèle est mise en circuit aux deux commutateurs commandés du côté sortie.

# FIG. 1

EP 0 306 950 B1

FIG. 2

EP 0 306 950 B1

FIG. 3

EP 0 306 950 B1

## FIG.4

## FIG.5

## FIG.6